(19) **Europäisches Patentamt**
**European Patent Office**
**Office européen des brevets**

(11) **EP 1 699 178 B1**

(12) **EUROPEAN PATENT SPECIFICATION**

(45) Date of publication and mention
of the grant of the patent:
**29.10.2008 Bulletin 2008/44**

(51) Int Cl.:
***H04L 12/28*** (2006.01)

(21) Application number: **06250536.7**

(22) Date of filing: **01.02.2006**

(54) **Method for iteratively determining mobile device-to-access point associations to achieve load balancing**

Verfahren zur iterativen Bestimmung der Assoziationen zwischen mobilen Endgeräten und Zugangspunkt zum erreichen von Lastverteilung

Procédé pour déterminer des associations entre des stations mobiles et un point d'accès pour obtenir l'équilibrage de charge

(84) Designated Contracting States:
**DE FR GB**

(30) Priority: **15.02.2005 US 57769**

(43) Date of publication of application:
**06.09.2006 Bulletin 2006/36**

(73) Proprietor: **Lucent Technologies Inc.**
**Murray Hill NJ 07974-0636 (US)**

(72) Inventors:
• **Bejerano, Yigal**
**Springfield, NJ 07081 (US)**
• **Golestani, Jamaloddin S.**
**New Providence, NJ 0794 (US)**
• **Han, Seung-Jae**
**Basking Ridge, NJ 07920 (US)**

• **Smith, Mark Anthony**
**Jersey City 07302 (US)**

(74) Representative: **Cockayne, Gillian et al**
**Alcatel-Lucent Telecom Limited**
**Unit 18, Core 3,**
**Workzone**
**Innova Business Park**
**Electric Avenue**
**Enfield**
**EN3 7XU (GB)**

(56) References cited:
**EP-A- 1 133 208**       **WO-A-20/04021717**
**US-A- 5 815 811**       **US-A1- 2002 085 719**
**US-A1- 2005 020 266**

**Description**

## BACKGROUND OF THE INVENTION

Wireless, local area networks (WLANs) are typically comprised of many mobile devices (e.g., wireless laptops, etc.). Each of the mobile devices is associated with a so-called "access point" (AP). The AP acts as a conduit through which messages, information, signaling, etc. may be transferred to, and from, a mobile device. Usually, there are many more mobile devices than APs. For example, it is not uncommon for tens or even hundreds of mobile devices to be associated with the same AP.

At any given point in time, however, one AP may have many mobile devices associated with it while another AP may have far fewer mobile devices associated with it. Comparatively speaking, the first AP may be viewed as being "congested" or overloaded while the latter AP may be viewed as relatively uncongested. Ideally, it is desirable to associate mobile devices with APs in a WLAN such that no single AP is congested. In practice, this is difficult to achieve. Nonetheless, load balancing techniques have been developed which attempt to alleviate congestion in APs to some degree or another.

Though these techniques may reduce congestion in APs, they have the adverse effect of reducing the transmission rate between a mobile device and an AP. That is, an existing technique may alleviate congestion in an AP by associating mobile devices located far from another AP with that AP. In such a case, though an AP's congestion level has been reduced, a mobile device's transmission rate may also be reduced because the mobile device is located so far from its associated AP.

It is, therefore, desirable to provide WLAN load balancing methods and devices that take into consideration the congestion levels and transmission rates of APs and mobile devices, respectively in order to associate a mobile device to an access point.

U.S. Patent No. 6,879,600 discusses the use of a mobile device in "arbitrating" and handing off communication sessions in a wireless network.

U.S. Patent Publication No. 20052026660102032 discloses methods for allowing access points to perform automatic channel selection.

## A SUMMARY OF SOME EXAMPLES OF THE INVENTION

We have recognized that the load balancing objectives of a WLAN can be met by iteratively determining mobile device-to-access point associations.

In one example of the present invention, a controller is operable to (a) generate a transmission rate ratio from transmission rates derived from transmissions between a mobile device and a currently associated access point (AP) and between the mobile device and another AP during an iterative time period; (b) generate a congestion level ratio from congestion measurements of the APs during the iterative time period; and (c) generate an effectiveness index from the transmission rate and congestion level ratios during the iterative time period.

The so-generated index is a relative indication of the desirability to continue to associate the mobile device with the current AP or to associate the mobile device with the other AP to achieve load balancing objectives of the WLAN during the iterative time period.

## A BRIEF DESCRIPTION OF EXEMPLARY DRAWINGS

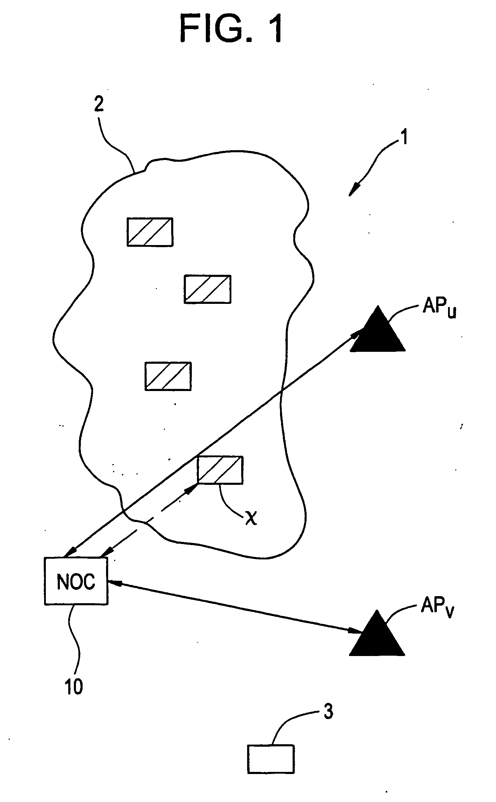

FIG. 1 depicts a simplified diagram of a WLAN that includes mobile devices that may be associated with APs while meeting the load balancing objectives of the WLAN in accordance with embodiments of the present invention.

## A DESCRIPTION OF THE INVENTION, INCLUDING EXAMPLES

Referring now to FIG. 1, there is shown a WLAN 1 which comprises a plurality of mobile devices 2,3. For illustrative purposes only, a group of mobile devices 2 is currently associated with an access point designated $AP_u$ while a single mobile device 3 is currently associated with another access point designated as $AP_u$. In addition, a mobile device $x$ is shown as part of the group of devices 2. For purposes of the explanation which follows, it can be said that access point $AP_u$ is congested or overloaded in comparison with access point $AP_u$ because many more mobile devices are currently associated with access point $AP_u$ than are associated with access point $AP_u$.

Ordinarily, if mobile device $x$ is located closer to access point $AP_u$, than to access point $AP_v$, the transmission rate between mobile device $x$ and access point $AP_u$ (abbreviated as $R_{x,u}$) will be higher than the transmission rate between mobile device $x$ and access point $AP_v$ (abbreviated as $R_{x,v}$). This being the case, ordinarily mobile device $x$ would associate itself with access point $AP_u$. However, such an association may adversely affect the overall load balancing objectives of the WLAN 1. In addition, it should be noted that although the transmission rate between mobile device $x$

and access point $AP_u$ may be higher than the transmission rate between mobile device $x$ and access point $AP_v$ during a given time period, mobile device $x$ may not be able to benefit from this transmission rate advantage even if it is associated with $AP_u$ because access point $AP_u$ is congested. Said another way, because access point $AP_u$ is associated with many mobile devices 2 it may take, relatively speaking, a long period of time before mobile device $x$ is granted the right to send transmissions to, or receive transmissions from, access point $AP_u$ using its advantageous transmission rate. Instead, mobile device $x$ may have to wait its turn to receive the benefit of the advantageous transmission rate. In contrast, even though the transmission rate between mobile device $x$ and access point $AP_v$ is lower than the transmission rate between mobile device $x$ and access point $AP_u$, mobile device $x$ may be immediately granted the right to send and receive transmissions to and from access point $AP_v$ because access point $AP_v$ is less congested than access point $AP_u$. Said another way, mobile device $x$ may not have to wait very long to send or receive transmissions to and from access point $AP_v$.

In accordance with one embodiment of the present invention, controller 10, which may be part of a network operations center (NOC), is operable to carry out load balancing by controlling the association of one or more mobile devices to an access point after taking into consideration the congestion levels of $AP_u$ and $AP_v$ as well as the transmission rates between mobile devices, such as $x$, and the two access points.

To simplify the explanation of the present invention which follows, the following discussion will initially focus on a single mobile device, $x$ and two access points, $AP_u$ and $AP_v$. However, it should be understood that the present invention is equally applicable to a plurality of mobile devices and more than two access points.

In accordance with one embodiment of the present invention, the controller 10 is operable to receive indicators associated with the transmission rates, $R_{x,v}$, $R_{x,u}$ from mobile device $x$ during an iterative time period, $T$, and is thereafter operable to generate a transmission rate ratio; $R_{x,v}/R_{x,u}$, from the received indicators. Again, it should be recalled that each of the indicators is based upon a transmission rate between the mobile device $x$ and one of the access points $AP_u$ or $AP_v$. In addition to a transmission rate ratio, the controller 10 is further operable to generate a congestion level ratio.

The congestion level ratio is derived from measurements of congestion on both access points $AP_u$ and $AP_v$. Hereafter, to avoid confusion, access point $AP_u$ may be referred to as a "current" AP while access point $AP_u$ may be referred to as a "potential", "other" or "new" AP, the former designation indicating that the mobile device $x$ is currently associated with $AP_u$ while the latter designations indicating that mobile device ix may become associated with access point $AP_v$ in the future.

The congestion of access points $AP_u$ and $AP_v$ may be measured by each of the access points during the iterative time period T, respectively, for example, and then sent to the controller 10.

In yet a further embodiment of the present invention, after generating the transmission rate ratio and congestion level ratio, a controller 10 may be further operable to generate an effectiveness index, $I_{x,u,v}$ from the transmission rate and congestion level ratios.

Before going further, as indicated above the measurements of transmission rates, congestion levels, the generation of an effectiveness index $I_{x,u,v}$ are repeatedly made on an iterative basis, i.e. once during each iteration of T, seconds. In addition, as will be explained below, decisions regarding whether or not to transfer the responsibility of an access point from a current AP to another AP are also carried out on an iterative basis. That is, such functions are carried out during a first, iterative time period (e.g., ten seconds) and then repeated during a next, and each successive time period.

It should be further understood that the designation $I_{x,u,v}$ indicates a particular relationship. In one embodiment of the present invention, this designation (sometimes referred to as a *triplet* by those skilled in the art) indicates the effectiveness index for a given mobile device $x$, its current access point $AP_u$ and another access point $AP_v$ to which it may potentially be transferred.

Continuing, the effectiveness index, $I_{x,u,v}$, may be determined using the following equation:

$$I_{x,u,v} = \left( R_{x,v} / R_{x,u} \right) [C_u / C_v]^{\beta} \qquad\qquad (1)$$

where the fraction $C_u/C_v$ is the congestion level ratio and the parameter $\beta$ is an exponent that specifies the relative importance that a network operator and the like may give to the congestion level ratio compared to the transmission rate ratio, $R_{x,v}/R_{x,u}$. When the parameter $\beta$ is set equal to 1, the two ratios are given equal importance. However, when the parameter $\beta$ is set to a value greater than 1, then the congestion level ratio is given a higher importance than the transmission rate ratio, $R_{x,v}/R_{x,u}$.

In accordance with the present invention, the value of a given index $I_{x,u,v}$ is a relative indication of the desirability to continue to associate a given mobile device $x$ with its currently associated access point, $AP_u$, or to associate the mobile device $x$ with another access point, namely, potential access point, $AP_v$, during a given iterative time period. Said another way, in general, the index $I_{x,u,v}$ is a relative indication of whether or not a mobile device should remain associated with its current access point or be re-assigned and associated with another access point in order to meet the load balancing objectives of WLAN 1 during a given iterative time period. By taking into consideration both the congestion levels of access points and the transmission rates between access points and a mobile device during a given iterative time period, a mobile device may be associated with a given access point (i.e., either its current access point or a potential access point) without compromising overall network throughput and load balancing objectives of a WLAN.

In yet an additional embodiment of the present invention, the controller 10 may associate mobile device x with the potential access point, $AP_v$ (i.e., change mobile device x's association from its current access point $AP_u$ to potential access point $AP_v$), when the generated index $I_{x,u,v}$ is equal to or greater than a threshold value, $\gamma$ during a given iterative time period. That is, a network operator may select a particular threshold value $\gamma$ for each index $I_{x,u,v.}$

For example, if the threshold value $\gamma$ is set to 2, then a mobile device's association may only be changed from its current access point (e.g., $AP_u$) to another access point (e.g., $AP_v$) if the generated effectiveness index $I_{x,u,v}$ is equal to 2 or more.

It should be understood that the value of the threshold $\gamma$ is one of design choice and may be varied from WLAN to WLAN or from one iterative time period to another iterative time period. However, generally speaking the value of the threshold $\gamma$ should be set equal to 1 or more.

Backtracking somewhat, it was mentioned before that the congestion level ratio was based on the congestion levels at access points $AP_u$ and $AP_v$. In an alternative embodiment of the present invention, these congestion levels are based on the congestion experienced by the downlink packet streams for each access point, $AP_u$ of $AP_v$, not uplink streams, during an iterative time period. The rationale for this is that it is fairly easy for an access point to measure downlink delays while it is fairly difficult for an access point to measure uplink delays. For the most part, using downlink delays is a good approximation of an overall delay because most information is transmitted in the downlink direction anyway. In addition, there is a strong positive correlation between the levels of congestion in the uplink and downlink directions. For a given access point, $AP_w$, the designation *Dw(t)* can be used to indicate such a measured downlink delay.

In addition to the average, downlink delay, the congestion level at each access point also takes into consideration the loss probability of each access point (i.e., the probability that a downlink packet will be dropped by an access point due to congestion). The loss probability for $AP_w$ during iteration T can be represented by the value *Lw(t).*

Again, it should be understood that both *Dw(t)* and *Lw(t)* may be measured based on downlink packets handled by an AP during an iterative time period, T.

Combining both *Dw*(t) and *Lw*(t), the congestion of a given AP may be represented by the following equation:

$$Cw(t) = Dw(t) + \alpha Lw(t) \tag{2}$$

where the value $\alpha$ may be used to appropriately adjust the weight (i.e., importance) given to the effects of loss probability, as compared to the effects of delay, in calculating the congestion level of an AP. From Equation (2), Little's formula (known in the art) may be used to further represent the average delay *Dw(t)* as:

$$Dw(t) = Qw(t) / Aw(t) \tag{3}$$

where Aw(t) denotes the average rate of packets arriving at an AP w that will be transmitted on a downlink channel to one or more mobile devices, and Qw(t) is the number of downlink packets present at the queue of AP *w*, during an iterative time period, *T*.

So far, the discussion above has mostly centered on a single mobile device *x* and two access points $AP_u$ and $AP_v$. However, as mentioned above, the present invention is applicable to a plurality of mobile devices and access points. With this in mind, the present invention provides for load balancing methods and devices that make use of a plurality of generated effectiveness indices derived from a plurality of mobile devices and access points where each index is repeatedly recalculated and generated during each iterative time period, *T*.

During each iterative time period, *T*, after each of the plurality of indices has been generated, the controller 10 may be operable to determine which of the generated indices equals or exceeds a threshold $\gamma$. For each index whose value equals or exceeds the threshold $\gamma$, there exists the possibility of transferring or changing a mobile device's association from a current access point to another potential access point (hereinafter sometimes referred to as a "transfer" or "transfers") during a particular iterative time period, *T*.

In yet another embodiment of the present invention, once the indices are generated the controller 10 may be operable to create a table of various so-called "transfer candidates" associated with the generated indices, each transfer candidate may be represented as the triplet, *x, u, v* where, as before, *x* is a mobile device, u is the access point *x* is currently associated with and *v* is an access point to which *x* may be potentially switched to during some later time period, *T*.

In accordance with one embodiment of the present invention, the transfer candidates in such a table may be listed in decreasing order, such that those transfer candidates having large indices, $I_{x,u,v}$ are ordered before those with smaller indices.

After creating such an ordered table of indices, the controller 10 may be operable to select a highest index and its associated transfer candidates in order to determine if a transfer is warranted. After making such a decision for the first selected index, the controller 10 is operable to repeatedly select the next highest ranked index and its transfer candidates, etc. The selection of a next index continues until each index in the ranked order has been selected or until another constraint (discussed subsequently) has been met.

Such an ordered table of indices $I_{x,u,v}$ and transfer candidates gives the controller 10 (and thus a network operator) the ability to prioritize transfers; that is, those mobile device-to-access point associations that are most adversely affecting the overall load balancing objectives of a WLAN can be addressed first.

Before the controller 10 may carry out a transfer associated with a selected index and its transfer candidates, however, the present invention may require that the controller 10 satisfy itself that other conditions are present or have been met. That is, during each iterative time period before carrying out a transfer of a mobile device from one access point to another, the controller 10 may be operable to verify that certain other constraints do not prohibit such a transfer.

One such constraint on transfers is used to avoid so-called "congestion oscillations."

In general, congestion oscillations occur when a load on one access point is shifted to another access point only to result in the congestion of the other access point. Thereafter, in response, the other access point may shift the same load back to the original access point, at which point the original access point may attempt to again shift the load back to the other access point, thus creating a cycle. To prevent such a recurring cycle or oscillation pattern, the present inventors developed additional features which may be used by controller 10 to determine whether a transfer is appropriate after selecting an index during a given iterative time period.

In one embodiment of the present invention, to prevent such oscillations, the present invention provides that the controller 10 may be operable to complete a transfer provided that during the current iterative time period the total number of transfers from the current access point, $AP_u$, has not exceeded a first allowable percentage (e.g., 10%) of the load on access point $AP_u$ and the total number of transfers into the potential access point, $AP_v$, has not exceeded a second allowable percentage (e.g., 10%) of the load on access point $AP_u$. In an alternative embodiment of the present invention, only if these two provisos are met may a transfer from $AP_u$ into $AP_v$ may go forward.

Though the same percentages were used in the examples given above, it should be understood that the percentages may, or may not, be the same.

If, during a given iterative time period, controller 10 determines that either percentage has been exceeded, then the controller 10 may be further operable to cease attempting to make new transfers from access point $AP_u$ and into access point $AP_v$. By so preventing transfers from access point $AP_u$ and into access point $AP_v$, congestion oscillation can be avoided.

It should be noted here, however, that though these provisos affect transfers from access point $APi_u$ or ones into access point $AP_v$, they do not affect transfers into access point $APi_u$ or from access point $AP_u$, i.e., such transfers may still continue.

There are circumstances, however, where AP load considerations may be of less concern than still other, more important concerns. To elaborate further, sometimes a network operator may realize that a particular mobile device is responsible for a large percentage of an access point's load which, under certain circumstances, results in the congestion of the access point. For example, it may occur that mobile device *x* is responsible for 25% of the load handled by current access point $APi_u$ during a given iterative time period. If this is so, then it may be next to impossible to ever change the access point that mobile device *x* is associated with without violating a load constraint, such as the one just described above.

Realizing this, the present invention provides for controllers, such as controller 10, that are operable to allow a mobile device *x* to change its association from its current access point $AP_u$ to access point $APi_v$ provided such a transfer is the first transfer from $AP_u$ during an iterative time period.

In effect, then, if the controller 10 selects an index and that index indicates a transfer should occur, the controller 10 may be operable to allow such a transfer to proceed during a particular iterative time period regardless of the loads on the current and potential access points involved in the transfer provided such a change represents the very first transfer from the current access point.

In addition to considering the loads on access points and the number of transfers during an iterative time period, T, the present inventors realized that network operators may require that other constraints be placed on transfers.

For example, if an access point, such as access point $AP_u$ is not congested, then there may be no need to transfer any mobile devices from such an access point. If this occurs, controller 10 may decide not to place the index transfer candidates representing such a situation in a transfer candidate table in the first place; in effect setting this index $I_{x,u,v}$ equal to 0.

Similarly, the present inventors realized that other network operators may wish to only change the AP associations of "active" mobile devices during a given iteration time period, *T*. For example, a network operator may consider a mobile device to be active when its so-called packet arrival rate during a particular iteration time period is greater than a particular percentage of a total, packet arrival rate at a particular access point, such as access point $AP_u$. For example, if the arrival rate associated with mobile device *x* is equal to or greater than at least 2% of the total arrival rate of packets at access point, $AP_u$, then mobile device *x* may be considered to be an active access point.

Accordingly, taking this into consideration, the present invention provides for controllers, such as controller 10, that may be operable to measure downlink arrival rates during a particular iteration time period, T. This downlink arrival rate is associated with the mobile device *x* and the current access point $AP_u$. If the measured arrival rate is not at least a certain percentage of the total arrival rate of the current access point $AP_u$, then controller 10 may be operable to decline to add the transfer candidates associated with such a situation into the table as well.

It should be understood that during a given iteration time period, *T*, the controller 10 proceeds to select each index, and its associated transfer candidates from the set of qualified indexes (i.e., those that exceed a threshold, γ, in decreasing order, and upon making such a selection proceeds to determine whether a transfer associated with the selected index is appropriate after taking into consideration some or all of the constraints discussed before.

Once the controller 10 has reached the end of a given table (i.e., last set of transfer candidates), no further transfers will be initiated. Instead, whatever transfers (i.e., mobile device-to-access point associations) are indicated will now be used.

At the end of the next iterative time period, the controller 10 may once again build a table of indices and their associated transfer candidates and initiate any indicated transfers.

In yet a further embodiment of the present invention, the iteration time period, *T*, referred to above may be synonymous with a so-called "run time" period. Using this run-time terminology, one example of how the invention may be carried out is as follows.

During a run time period, the controller 10 may permit a mobile device *x* to remain associated with a current access point $AP_u$. Toward the end of this run time, the controller 10 may be operable to receive indicators of transmission rates and congestion levels from mobile device *x*, and access points $AP_u$ and $AP_v$, respectively. Before this run time has expired, the controller 10 may be further operable to determine an effectiveness index $I_{x,u,v}$ based on the generated transmission rate and congestion level ratios. In addition, controller 10 may be operable to apply one or more of the constraints discussed above before deciding whether to carry out a transfer. If such a transfer is allowed, at the end of a run time, the controller 10 may be operable to change the AP association of mobile device x from its current access point $AP_u$ to a new access point $AP_v$. Thereafter, the controller 10 may then repeat the process just described.

It should be understood that the functions and features of controller 10, mobile device *x*, and access points $AP_u$ and $AP_v$ may be carried out by software, firmware, hardware or some combination of the three. If software or firmware, one or more programmable memory devices may be used to store one or more programs which in turn may carry out or control the functions and features of the controller 10, mobile device *x*, and/or access points $AP_u$ and $AP_v$.

The techniques of the present invention may be used in conjunction with one or more additional techniques to actually change the settings within a mobile device, e.g., "forcing" a mobile device to become associated with a particular access point, as dictated by load balancing objectives, not just signal-to-noise objectives. One such technique is disclosed in co-pending U.S. Patent Application No. 11/026,904, the disclosure of which is incorporated herein as if set forth in full herein.

The discussion above has set forth a brief description of the present invention using some examples. It should be understood, however, that the true scope of the present invention is determined by the claims which follow.

**Claims**

1. A method for iteratively determining a mobile device-to-access point association in a wireless, local area network (WLAN) (1, 10) to achieve load balancing **CHARACTERIZED BY**:

   (a) generating a transmission rate ratio from transmission rates derived from transmissions between a mobile device (x) and a currently associated access point (AP) ($AP_u$) and between the mobile device and another AP ($AP_v$) during an iterative time period;
   (b) generating a congestion level ratio from congestion measurements of the APs during the iterative time period;
   (c) generating an effectiveness index from the transmission rate ratio and an exponential value derived from the congestion level ratio during the iterative time period,

   wherein the index is a relative indication of the desirability to continue to associate the mobile device with the current AP or to associate the mobile device with the other AP to achieve load balancing objectives of the WLAN during the iterative time period.

**2.** The method as in claim 1 further comprising the steps of:

repeating steps (a) through (c) for each of a plurality of mobile devices and each device's current AP and another AP during an iterative time period;

determining which values of the generated indices equals or exceeds a threshold during the iterative time period; and

organizing each index, whose value equals or exceeds the threshold, into a ranked grouping of indices in descending order from a highest index value to a lowest index value during the iterative time period.

**3.** The method as in claim 2 further comprising the steps of:

selecting a highest remaining index value; and

associating a mobile device indicated by the selected index with an AP other than its current AP during the iterative time period.

**4.** The method as in claim 1 further comprising the step of associating the mobile device with the other AP when the index is equal to, or greater than, a threshold value during the iterative time period.

**5.** The method as in claim 2 further comprising the steps of:

monitoring a number of transfers from a current AP during an iterative time period;

monitoring a number of transfers to another AP during the iterative time period; and

associating a mobile device with the other AP when the index is equal to, or greater than, a threshold value provided the number of transfers from the current AP has not exceeded a first allowable percentage during the iterative time period and provided the number of transfers to the other AP has not exceeded a second allowable percentage during the iterative time period.

**6.** The method as in claim 5 wherein the first and second allowable percentages are the same.

**7.** The method as in claim 6 wherein the first and second allowable percentages are equal to 10%.

**8.** The method as in claim 2 further comprising the steps of:

associating the mobile device with another AP if such an association is the first such association from the current AP during the iterative time period provided the index is equal to or greater than, a threshold value.

**9.** The method as in claim 2 further comprising the step of:

declining to associate a mobile device with another AP when a current AP is not congested during an iterative time period.

**10.** The method as in claim 2 further comprising the steps of:

measuring a downlink arrival rate associated with a mobile device and a current AP when the index is equal to, or greater than, the threshold during an iterative time period;

associating the mobile device with another AP provided the measured arrival rate is at least a minimum percentage of a total arrival rate at the current AP during the iterative time period; and

declining to associate the mobile device with the other AP when the measured arrival rate is less than the minimum percentage of the total arrival rate during the iterative time period.

**Patentansprüche**

**1.** Ein Verfahren zur iterativen Bestimmung der Assoziation zwischen einem mobilen Endgerät und einem Zugangspunkt in einem drahtlosen lokalen Netzwerk (WLAN) (1, 10) zum Erreichen einer Lastverteilung, **GEKENNZEICHNET DURCH**:

(a) Erzeugen einer Übertragungsraten-Ratio aus den von Übertragungen zwischen einem mobilen Endgerät (x) und einem momentan assoziierten Zugangspunkt (AP) ($AP_u$) und zwischen dem mobilen Endgerät und einem anderen AP ($AP_v$) während eines iterativen Zeitraums abgeleiteten Übertragungsraten;

(b) Erzeugen einer Überlastungspegelratio aus Überlastungsmessungen der APs während des iterativen Zeitraums;

(c) Erzeugen eines Effizienzindexes aus der Übertragungsraten-Ratio und einem von der Überlastungspegelratio während des iterativen Zeitraums abgeleiteten Exponentialwert,

wobei der Index eine relative Angabe darüber ist, ob ein Fortfahren des Assoziierens des mobilen Endgeräts mit dem momentanen AP wünschenswert ist, oder ob das mobile Endgerät mit dem anderen AP assoziiert werden soll, um während des iterativen Zeitraums die Lastverteilungszielsetzungen des WLAN zu erreichen.

2. Das Verfahren nach Anspruch 1, weiterhin die folgenden Schritte umfassend:

Wiederholen der Schritte (a) bis (c) für ein jedes einer Vielzahl von mobilen Endgeräten und jeden dem Endgerät momentan zugeteilten AP und einen anderen AP während eines iterativen Zeitraums;

Ermitteln, welche Werte der erzeugten Indexe während des iterativen Zeitraums einem Grenzwert entsprechen oder diesen überschreiten; und

Organisieren der Indexe, deren Wert dem Grenzwert entspricht oder diesen überschreitet, in eine Gruppe von Indexen in absteigender Reihenfolge, vom höchsten bis zum niedrigsten Indexwert, während des iterativen Zeitraums.

3. Das Verfahren nach Anspruch 2, weiterhin die folgenden Schritte umfassend:

Auswählen eines höchsten verbleibenden Indexwertes; und

Assoziieren eines von dem ausgewählten Index angegebenen mobilen Endgeräts mit einem AP, der sich von dem momentan zugeordneten AP unterscheidet, während des iterativen Zeitraums.

4. Das Verfahren nach Anspruch 1, welches weiterhin den Schritt des Assoziierens des mobilen Endgeräts mit dem anderen AP, wenn der Index während des iterativen Zeitraums einem Grenzwert entspricht oder diesen überschreitet, umfasst.

5. Das Verfahren nach Anspruch 2, weiterhin die folgenden Schritte umfassend:

Überwachen einer Anzahl von Transfers von einem momentan zugeordneten AP während eines iterativen Zeitraums;

Überwachen einer Anzahl von Transfers an einen anderen AP während des iterativen Zeitraums; und

Assoziieren eines mobilen Endgeräts mit dem anderen AP, wenn der Index einem Grenzwert entspricht oder diesen überschreitet, unter der Voraussetzung, dass die Anzahl der Transfers von dem momentan zugeordneten AP nicht einen ersten zulässigen Prozentsatz während des iterativen Zeitraums überschritten hat, und dass die Anzahl der Transfers an den anderen AP nicht einen zweiten zulässigen Prozentsatz während des iterativen Zeitraums überschritten hat.

6. Das Verfahren nach Anspruch 5, wobei der erste und der zweite zulässige Prozentsatz gleichwertig sind.

7. Das Verfahren nach Anspruch 6, wobei der erste und der zweite zulässige Prozentsatz 10 % entsprechen.

8. Das Verfahren nach Anspruch 2, weiterhin die folgenden Schritte umfassend:

Assoziieren des mobilen Endgeräts mit einem anderen AP, wenn eine solche Assoziation die erste Assoziation von dem momentanen AP während des iterativen Zeitraums ist, unter der Voraussetzung, dass der Index einem Grenzwert entspricht oder diesen überschreitet.

9. Das Verfahren nach Anspruch 2, weiterhin den folgenden Schritt umfassend:

Verweigern der Assoziation eines mobilen Endgeräts mit einem anderen AP, wenn ein momentaner AP während eines iterativen Zeitraums nicht überlastet ist.

10. Das Verfahren nach Anspruch 2, weiterhin die folgenden Schritte umfassend:

**EP 1 699 178 B1**

Messen einer Downlink-Ankunftsrate, welche mit einem mobilen Endgerät und einem momentanen AP assoziiert ist, wenn der Index während des iterativen Zeitraums dem Grenzwert entspricht oder diesen überschreitet;
Assoziieren des mobilen Endgeräts mit einem anderen AP, unter der Voraussetzung, dass die gemessene Ankunftsrate während des iterativen Zeitraums mindestens einem minimalen Prozentsatz einer Gesamtankunftsrate an dem momentanen AP beträgt; und
Verweigern der Assoziation des mobilen Endgeräts mit dem anderen AP, wenn die gemessene Ankunftsrate während des iterativen Zeitraums niedriger als der minimale Prozentsatz der Gesamtankunftsrate ist.

**Revendications**

1. Procédé de détermination itérative d'une association appareil mobile à point d'accès dans un réseau local sans fil (WLAN) (1, 10) afin de réaliser une équilibrage de charge, **caractérisé par** :

   (a) la génération d'un rapport de vitesses de transmission des vitesses de transmission dérivées des transmissions entre un appareil mobile (x) et un point d'accès (AP) ($AP_u$) actuellement associé et entre le dispositif mobile et un autre AP ($AP_v$) pendant une période de temps itérative ;
   (b) la génération d'un rapport de niveau d'encombrement à partir des mesures d'encombrement des AP pendant la période de temps itérative ;
   (c) la génération d'un indice d'efficacité à partir du rapport de vitesses de transmission et un valeur exponentielle dérivée du rapport de niveau d'encombrement pendant la période de temps itérative ;

   l'indice étant une indication relative du souhait de continuer d'associer l'appareil mobile avec l'AP actuel ou d'associer l'appareil mobile avec l'autre AP afin de réaliser les objectifs d'équilibrage de charge du WLAN pendant la période de temps itérative.

2. Procédé selon la revendication 1, comprenant les étapes suivantes :

   Répétition des étapes (a) à (c) pour chacun de la pluralité des appareils mobiles et chacun des AP actuels et autres AP de l'appareil pendant la période de temps itérative ;
   Détermination des valeurs des indices générés qui sont égales ou supérieures à un seuil pendant la période de temps itérative ; et
   Organisation de chacun des indices dont la valeur est égale ou supérieure au seuil en un groupe classé d'indices dans l'ordre décroissant d'une valeur d'indice la plus élevée jusqu'à une valeur d'indice la plus faible pendant la période de temps itérative.

3. Procédé selon la revendication 1, comprenant en plus les étapes suivantes :

   Sélection d'une valeur d'indice restante plus élevée ; et
   Association d'un appareil mobile indiqué par l'indice sélectionné avec un AP autre que l'AP courant pendant la période de temps itérative.

4. Procédé selon la revendication 1, comprenant en plus l'étape d'association de l'appareil mobile avec l'autre AP lorsque l'indice est égal ou supérieur à une valeur de seuil pendant la période de temps itérative.

5. Procédé selon la revendication 2, comprenant en plus les étapes suivantes :

   Surveillance d'un certain nombre de transferts depuis un AP courant pendant une période de temps itérative ;
   Surveillance d'un certain nombre de transferts vers un autre AP pendant la période de temps itérative et ;
   Association d'un appareil mobile avec l'autre AP lorsque l'indice est égal ou supérieur à une valeur de seuil, sous réserve que le nombre de transferts depuis l'AP courant n'a pas dépassé un premier pourcentage autorisé pendant la période de temps itérative et sous réserve que le nombre de transferts vers l'autre AP n'a pas dépassé un deuxième pourcentage autorisé pendant la période de temps itérative.

6. Procédé selon la revendication 5, le premier et le deuxième pourcentage autorisé étant les mêmes.

7. Procédé selon la revendication 6, le premier et le deuxième pourcentage autorisé étant égaux à 10 %.

**9**

**8.** Procédé selon la revendication 2, comprenant les étapes suivantes :

Association de l'appareil mobile avec un autre AP si un telle association est la première d'une telle association de l'AP courant pendant la période de temps itérative, sous réserve que l'indice soit égal ou supérieur à une valeur de seuil.

**9.** Procédé selon la revendication 2, comprenant l'étape suivante :

Refus d'associer un appareil mobile avec un autre AP lorsqu'un AP courant n'est pas encombré pendant une période de temps itérative.

**10.** Procédé selon la revendication 2, comprenant en plus les étapes suivantes :

Mesure d'une vitesse d'arrivée de liaison descendante associée avec un appareil mobile et un AP courant lorsque l'indice est égal ou supérieur au seuil pendant une période de temps itérative ;
Association de l'appareil mobile avec un autre AP sous réserve que la vitesse d'arrivée de mesure soit au moins un pourcentage minimum de la vitesse d'arrivée totale au niveau de l'AP courant pendant la période de temps itérative ; et
Refus de l'association de l'appareil mobile avec l'autre AP lorsque la vitesse d'arrivée de mesure est inférieure au pourcentage minimum de la vitesse d'arrivée totale pendant la période de temps itérative.

# FIG. 1

**EP 1 699 178 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6879600 B
- US 20052026660102032 A

- US 026904 A